**Europäisches Patentamt**

**European Patent Office**

**Office européen des brevets**

(19)

(11) Numéro de publication: **0 130 592
B1**

(12) **FASCICULE DE BREVET EUROPEEN**

(45) Date de publication du fascicule du brevet:
**03.06.87**

(51) Int. Cl.⁴: **B 23 C 5/10,** B 23 B 51/00,
B 23 C 5/14, B 24 B 3/34

(21) Numéro de dépôt: **84107528.6**

(22) Date de dépôt: **29.06.84**

(54) **Plaquette de coupe pour usinage par rotation, outil garni de telles plaquettes et procédé d'affûtage de telles plaquettes.**

(30) Priorité: **01.07.83 FR 8310990**

(43) Date de publication de la demande:
**09.01.85 Bulletin 85/2**

(45) Mention de la délivrance du brevet:
**03.06.87 Bulletin 87/23**

(84) Etats contractants désignés:
**CH DE GB IT LI SE**

(56) Documents cités:
**DE - A - 1 908 389
FR - A - 964 326
FR - A - 2 433 998
FR - A - 2 442 684
FR - A - 2 514 677
GB - A - 1 170 670
US - A - 4 280 774**

(73) Titulaire: **ATELIER DE RECTIFICATION ET D'AFFUTAGE
A.R.A.F., Société à Responsabilité Limitée dite, 2, rue
d'Aigremont, F-78300 Poissy (FR)**

(72) Inventeur: **Costil, Marcel, 22, Rue Vignon,
F-95240 Cormeilles en Parisis (FR)**

(74) Mandataire: **Casalonga, Axel et al, BUREAU D.A.
CASALONGA OFFICE JOSSE & PETIT Morassistrasse 8,
D-8000 München 5 (DE)**

## Description

La présente invention se rapporte à une plaquette de coupe amovible destinée à un outil de coupe comprenant un porte-outil entraîné en rotation autour d'un axe. L'invention concerne également un outil comprenant un porte-outil entraîné en rotation autour d'un axe et destiné à recevoir de telles plaquettes de coupe. L'invention a par ailleurs trait à un procédé d'affûtage de telles plaquettes de coupe.

Jusqu'à présent, le positionnement sur un porte-outil entraîné en rotation, de plaquettes de coupe préalablement affûtées se fait généralement par réglage des plaquettes par rapport au porte-outil. Un tel réglage ne permet que d'obtenir une précision médiocre.

Par le brevet français n° 7824660 publié sous le n° 2433998, il est connu, pour l'usinage rayonné de précision, d'utiliser une plaquette de coupe en forme de disque. Une telle plaquette peut être affûtée par rectification circulaire, d'où une précision élevée.

Toutefois, cette plaquette en forme de disque ne permet de réaliser qu'un outil de coupe à deux tranchants. Il en résulte une vitesse d'avance réduite, sensible d'autant plus que le diamètre est important.

La présente invention a pour objet une plaquette de coupe qui puisse être affûtée avec une grande précision et puisse être montée sur un porte-outil à plus de deux tranchants, en conservant la précision obtenue à l'affûtage, permettant ainsi un usinage à la fois de haute précision et à grande vitesse d'avance. L'invention a également pour objet un procédé d'affûtage de grande précision pour de telles plaquettes de coupe.

La plaquette de coupe amovible conforme à l'invention, destinée à un outil de coupe comprenant un porte-outil entraîné en rotation autour d'un axe, est constitué par un secteur de couronne circulaire dont la surface correspondante à l'arc intérieur est usinée en segment de cylindre et la surface correspondant à l'arc extérieur est usinée en segment de cône.

L'outil comprenant un porte-outil entraîné en rotation autour d'un axe, destiné à recevoir de telles plaquettes de coupe dont le rayon de l'arc intérieur et de l'arc extérieur ainsi que l'épaisseur sont identiques, comporte une partie sphérique centrée sur son axe de rotation et présentant le même rayon que celui de l'arc intérieur des plaquettes en forme de secteur. Ce porte-outil comporte, en outre, des moyens pour recevoir et immobiliser les plaquettes en contact par leur arc intérieur avec ladite partie sphérique.

Pour l'affûtage des plaquettes de coupe suivant l'invention et dont le rayon de l'arc intérieur et de l'arc extérieur ainsi que l'épaisseur sont identiques, on utilise un montage de rectification présentant un axe ayant le même rayon que l'arc intérieur des plaquettes. On fixe les plaquettes sur ce montage, dans un même plan transversal audit axe, l'arc intérieur des plaquettes étant en contact avec ledit axe, et on affûte les plaquettes en cône par rectification circulaire sur leur arc extérieur.

Du fait de l'utilisation, sur le porte-outil, en vue de l'appui des arcs intérieurs des plaquettes, d'une partie sphérique ayant le même rayon que l'axe du montage de rectification, la précision obtenue à l'affûtage, grâce à la rectification circulaire, se retrouve sur l'outil. En d'autres termes, chaque pont du tranchant de plaquette formé sur l'arc extérieur de la plaquette occupe, sur le montage de rectification et sur le porte-outil, la même position relative par rapport au centre de l'axe du montage de rectification et par rapport au centre de la partie sphérique du porte-outil.

Les plaquettes suivant l'invention peuvent être montée, par exemple sur un porte-outil d'alésoir. Pour un alésoir à quatre tranchants, les plaquettes en forme de secteur peuvent alors être quatre plaquettes identiques couvrant un arc de 90° chacune.

Les plaquettes suivant l'invention peuvent également être utilisée pour un porte-outil de fraise boule utilisé en particulier pour le fraisage de précision par reproduction. Dans ce cas, trois des quatre plaquettes équipant le porte-outil s'étendent sur un arc légèrement inférieur à 90°, tandis que la quatrième plaquette s'étend sur un arc légèrement supérieur à 90°. Cette quatrième plaquette s'étend après montage sur le porte-outil, au-delà de l'axe de rotation du porte-outil et reçoit, un affûtage en chanfrein sur sa partie dépassant l'axe de rotation, de manière à obtenir une pointe sur l'axe de rotation.

Dans le cas d'un tel outil formant fraise-boule, il est avantageux que les logements prévus dans le porte-outil pour recevoir les plaquettes soient disposés de façon que la face de coupe de chaque plaquette passe par l'axe de rotation du porte-outil, de préférence suivant un rayon.

La présente invention a aussi pour objet un procédé d'affûtage de ces plaquettes de coupe comme défini dans la revendication 6.

En se référant au dessin annexé, on va décrire ci-après plus en détail un mode de réalisation illustratif et non limitatif de l'objet de l'invention; sur le dessin:

La fig. 1 est une vue en perspective d'un outil formant fraise-boule, à quatre arêtes de coupe;

la fig. 2 est une vue en bout, avec arrachement partiel, de l'outil de la fig. 1;

la fig. 3 est une coupe suivant III–III de la fig. 2;

la fig. 4 est une vue en élévation latérale d'un montage de rectification pour l'affûtage des quatre plaquettes de l'outil des fig. 1 à 3;

la fig. 5 est une coupe suivant V–V de la fig. 4.

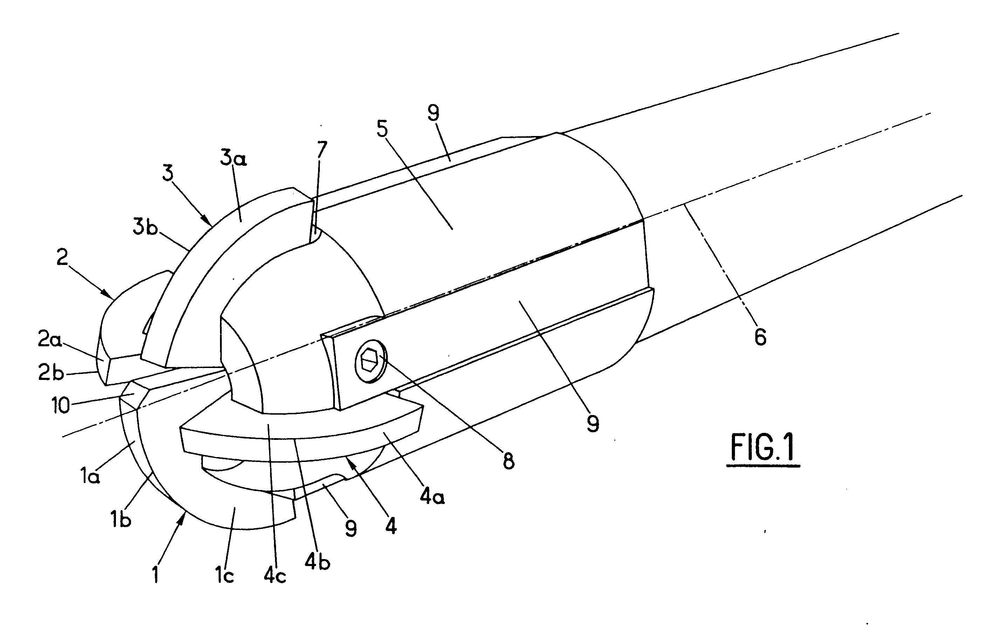

L'outil à quatre plaquettes rapportées selon les fig. 1 à 3 forme une fraise-boule, par exemple pour le fraisage de précision par reproduction. L'outil comprend quatre plaquettes de coupe 1, 2, 3, 4 rapportées à une extrémité d'un porte-outil 5 entraîné en rotation autour de l'axe 6.

Les quatre plaquettes 1, 2, 3 et 4 sont bloquées en position dans des logements 7 en forme de fentes axiales du porte-outil 5 à l'aide de vis 8 et de plaquettes brise-copeaux 9.

Les quatre plaquettes 1, 2, 3, 4 équipant le porte-outil 5 sont illustrées sur la fig. 5. On reconnaît que les quatre plaquettes 1 à 4 présentent la forme de secteurs de couronne annulaire, la plaquette 1 s'étendant sur un arc de plus de 90° et les trois plaquettes 2, 3 et 4 s'étendant chacune sur un arc de moins de 90°.

Telle que cela apparaît notamment sur la fig. 3, seule de plaquette 1 s'étend au-delà de l'axe 6 du porte-outil, la partie dépassant l'axe 6 étant affûtée en chanfrein en 10.

Les plaquettes 1, 2, 3 et 4 sont usinées en cylindre sur leur arc intérieur et sont chanfreinées, c'est-à-dire usinés en cône, sur leur arc extérieur, de manière à former une dépouille 1a, 2a, 3a, 4a derrière l'arête de coupe 1b, 2b, 3b, 4b.

Le porte-outil 5 présente, au fond des logements 7 des plaquettes, une bille 11 fixée par exemple par collage, le centre de la bille 11 se trouvant sur l'axe de rotation 6. Le rayon de la bille 11 correspond au rayon de l'arc intérieur des plaquettes 1, 2, 3 et 4 en forme de couronne circulaire.

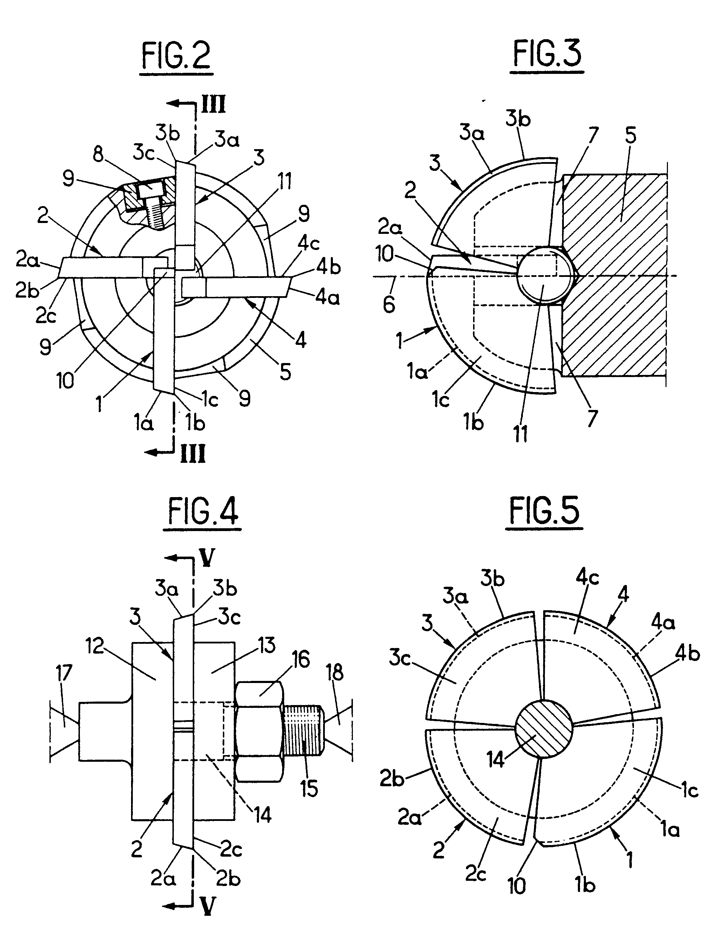

On reconnaît enfin sur la fig. 2 que les logements 7 recevant les plaquettes 1, 2, 3 et 4 sont décalés de manière que les faces de coupe 1c, 2c, 3c, 4c des plaquettes passent par l'axe de rotation 6.

L'affûtage des plaquettes de coupe 1, 2, 3 et 4 de l'outil selon les fig. 1 à 3 s'effectue par rectification circulaire, les quatre plaquettes étant fixées sur un montage de rectification illustré par les fig. 4 et 5. Ce montage comprend deux plateaux 12 et 13, le plateau 12 comportant un axe 14 lisse, fileté dans sa partie d'extrémité libre 15, alors que le plateau 13 est percé d'un trou. Le rayon de la partie lisse de l'axe 14 correspond au rayon de la bille 11, donc au rayon de l'arc intérieur des plaquettes 1, 2, 3 et 4. Un écrou 16 vissé sur la partie filetée 15 permet de serrer le plateau 13 contre le plateau 12. Ce montage de rectification peut être serré entre deux pointes 17 et 18.

On fixe les quatre plaquettes 1, 2, 3 et 4 de la manière visible sur la fig. 5 dans un même plan entre les deux plateaux 12 et 13, les plaquettes portant par leur arc intérieur contre l'axe 14. Les plaquettes 1 à 4 sont ainsi rectifiée au même diamètre sur leur arc extérieur, à savoir en cône en vue de la formation d'une dépouille de coupe 1a, 2a, 3a, 4a.

Grâce à cette rectification circulaire des plaquettes 1 à 4 en contact par leur arc intérieur avec l'axe 14 et au montage subséquent des plaquettes 1 à 4 sur le porte-outil 11 avec leur arc intérieur en contact avec la bille 11 ayant le même rayon que l'axe 14, on retrouve, sur l'outil, la précision obtenue à la rectification des plaquettes en ce sens que chaque partie de l'arête de coupe des plaquettes est à égale distance du centre de la bille 11 comme elle était à égale distance de l'axe géométrique de l'axe 14 du montage de rectification.

L'invention est aussi applicable à d'autres outils, par exemple des outils d'alésage, auquel cas les plaquettes peuvent être toutes identiques et sont avantageusement disposées de manière à s'étendre vers l'avant et vers l'arrière par rapport à un plan perpendiculaire à l'axe de rotation 6 et passant par le centre de la bille 11.

Le nombre des plaquettes de coupe équipant un outil peut également être inférieur ou supérieur à quatre, un nombre de plaquettes supérieures à quatre étant particulièrement avantageux dans le cas de grand diamètre.

**Revendications**

1. Plaquette de coupe amovible destinée à un outil de coupe comprenant un porte-outil entraîné en rotation autour d'un axe, caractérisé par le fait qu'elle est constituée par un secteur de couronne circulaire dont la surface correspondant à l'arc intérieur est usinée en segment de cylindre et la surface correspondant à l'arc extérieur est usinée en segment de cône.

2. Plaquette suivant la revendication 1, caractérisée par le fait que dans son application à un outil travaillant jusqu'à l'axe de rotation tel qu'une fraise-boule, l'une des plaquettes destinée à équiper le porte-outil s'étend sur un arc plus grand que celui des autres plaquettes, son arête de coupe atteignant l'axe de rotation.

3. Plaquette de coupe suivant la revendication 2, caractérisée par le fait que l'une des plaquettes s'étend sur un arc supérieur à 90°, tandis que les autres plaquettes s'étendent sur un arc inférieur à 90°.

4. Outil comprenant un porte-outil entraîné en rotation autour d'un axe et destiné à recevoir des plaquettes de coupe selon l'une quelconque des revendications 1 à 3, le rayon de l'arc intérieur et de l'arc extérieur ainsi que l'épaisseur de chaque plaquette de coupe étant identiques, caractérisé par le fait que le porte-outil (5) comporte une partie sphérique (11) centrée sur son axe de rotation (6) et présentant le même rayon que l'arc intérieur des secteurs des plaquettes (1, 2, 3, 4), ainsi que des moyens (7, 8, 9) pour recevoir et immobiliser les plaquettes en contact par leur arc intérieur avec ladite partie sphérique.

5. Outil suivant la revendication 4, caractérisé par le fait que lesdits moyens comprennent des logements (7) en forme de fentes axiales ménagés dans le porte-outil (5) de manière que les faces de coupe (1c, 2c, 3c, 4c) des différentes plaquettes passent par l'axe de rotation (6).

6. Procédé d'affûtage de plaquettes de coupe suivant l'une quelconque des revendications 1 à 3, le rayon de l'arc intérieur et de l'arc extérieur ainsi que l'épaisseur de chaque plaquette de coupe étant identiques, destinées à un outil suivant la revendication 4 ou 5, caractérisé par le fait qu'on fixe toutes les plaquettes destinées à un outil, dans un même plan transversal, sur un montage de rectification (12 à 14) de type connu en soi, présentant un axe (14) ayant le même rayon que l'arc intérieur des plaquettes (1 à 4), de manière que l'arc intérieur des plaquettes se trouve en contact avec ledit axe, et qu'on affûte les plaquettes par rectification circulaire conique sur leur arc extérieur.

## Patentansprüche

1. Abnehmbare Schneidplatte, die für ein Schneidwerkzeug bestimmt ist, das einen um eine Achse drehbaren Werkzeughalter besitzt, dadurch gekennzeichnet, dass sie aus einem Kreisringabschnitt besteht, dessen dem inneren Kreisbogen entsprechende Oberfläche als Zylindersegment und dessen dem äusseren Kreisbogen entsprechende Oberfläche als Konussegment bearbeitet ist.

2. Schneidplatte gemäss Patentanspruch 1, dadurch gekennzeichnet, dass bei ihrem Einsatz in ein Werkzeug, das bis zur Drehachse arbeitet, wie ein Kugelfräser, eine der Platten, die zur Bestükkung des Schneidwerkzeugs bestimmt sind, sich über einen Kreisbogen erstreckt, der grösser als der der anderen Platten ist, wobei seine Schneidkante die Drehachse erreicht.

3. Schneidplatte gemäss Patentanspruch 2, dadurch gekennzeichnet, dass die eine Platte sich über einen Kreisbogen von mehr als 90° erstreckt, während die anderen Platten sich über einen Kreisbogen von weniger als 90° erstrecken.

4. Werkzeug, das einen um eine Achse drehbaren Werkzeughalter besitzt, der zur Aufnahme der Schneidplatten gemäss einem der Patentansprüche 1 bis 3 bestimmt ist, wobei der Radius des inneren Kreisbogens und des äusseren Kreisbogens sowie die Stärke jeder Schneidplatte identisch sind, dadurch gekennzeichnet, dass der Werkzeughalter (5) einen kugelförmigen Teil (11), der auf seiner Drehachse (6) zentriert ist und den gleichen Radius wie der innere Kreisbogen der Abschnitte der Platten (1; 2, 3, 4) aufweist, sowie Mittel (7, 8, 9) besitzt, um die Platten so aufzunehmen und festzuhalten, dass sie mit ihrem inneren Kreisbogen mit dem erwähnten kugelförmigen Teil in Kontakt stehen.

5. Werkzeug gemäss Patentanspruch 4, dadurch gekennzeichnet, dass die erwähnten Mittel Aufnahmen (7) in Form von axialen Schlitzen enthalten, die in dem Werkzeughalter (5) so eingearbeitet sind, dass die Schnittflächen (1c, 2c, 3c, 4c) der einzelnen Platten durch die Drehachse (6) gehen.

6. Verfahren zum Schärfen von Schneidplatten gemäss einem der Patentansprüche 1 bis 3, bei denen der Radius des inneren Kreisbogens und des äusseren Kreisbogens sowie die Stärke jeder Schneidplatte identisch sind und die für ein Werkzeug gemäss einem der Patentansprüche 4 oder 5 bestimmt sind, dadurch gekennzeichnet, dass sämtliche für ein Werkzeug bestimmte Platten in einer gleichen Querebene auf einer Schleifeinrichtung (12 bis 14) von bekannter Bauart befestigt werden, die eine Spindel (14) mit gleichem Radius wie der innere Kreisbogen der Platten (1 bis 4) aufweist, so dass der innere Kreisbogen der Platten sich in Berührung mit dieser Spindel befindet, und dass die Platten durch konisches Rundschleifen an ihren äusseren Kreisbogen geschärft werden.

## Claims

1. Removable cutting tip intended for a cutting tool comprising a tool holder driven in rotation about an axis, characterized in that it consists of an annulus sector, the surface of which corresponding to the inner arc is machined in the form of a cylinder segment and the surface of which corresponding to the outer arc is machined in the form of a cone segment.

2. Tip according to claim 1, characterized in that, when applied to a tool which machines up to the axis of rotation, such as a ball-type milling cutter, one of the tips intended to equip the tool holder extends through an arc greater than that of the other tips, its cutting edge reaching the axis of rotation.

3. Cutting tip according to claim 2, characterized in that one of the tips extends through an arc greater than 90°, while the other tips extend through an arc less then 90°.

4. Tool comprising a tool holder driven in rotation about an axis and intended to receive cutting tips according to any one of claims 1 to 3, the radius of the inner arc and of the outer arc as well as the thickness of each cutting tip being identical, characterized in that the tool holder (5) has a spherical part (11) centered about its axis of rotation (6) and having the same radius as the inner arc of the sectors of the tips (1, 2, 3, 4), as well as means (7, 8, 9) for receiving and fixing the tips with their inner arc in contact with the said spherical part.

5. Tool according to claim 4, characterized in that the said means comprise recesses (7) in the form of axial slots provided in the tool holder (5) such that the cutting faces (1c, 2c, 3c, 4c) of the various tips pass through the axis of rotation (6).

6. Method for sharpening cutting tips according to any one of claims 1 to 3, the radius of the inner arc and of the outer arc as well as the thickness of each cutting tip being identical, which tips are intended for a tool according to claim 4 or 5, characterized in that all the tips intended for a tool are fixed, in the same transverse plane, on a grinding assembly (12 to 14) of a type known per se, with a spindle (14) having the same radius as the inner arc of the tips (1 to 4), such that the inner arc of the tips is in contact with the said spindle, and in that the tips are sharpened by means of conical circular grinding of their outer arc.

FIG.1

## FIG.2

## FIG.3

## FIG.4

## FIG.5